# EUROPÄISCHE PATENTANMELDUNG

(11) **EP 1 098 268 A2**
(43) Veröffentlichungstag der Anmeldung: **09.05.2001**
(21) Anmeldenummer: 00122647.1
(22) Anmeldetag: 18.10.2000
(51) Int. Cl.: G06T 7/00

(54) **Verfahren zur dreidimensionalen optischen Vermessung von Objektoberflächen**

(30) Priorität: 03.11.1999 DE 19953063
(71) Anmelder: Institut für Neurosimulation und Bildtechnologien GmbH, 39120 Magdeburg (DE)
(72) Erfinder: Albrecht, Peter, 39104 Magdeburg (DE); Calow, Roman, 06886 Wittenberg (DE); Magdziarek, Igor, 39114 Magdeburg (DE)
(74) Vertreter: Leinung, Günter

(57) **Zusammenfassung**

Die Erfindung betrifft ein Verfahren zur dreidimensionalen optischen Vermessung von Objektoberflächen mittels einer digitalen Kamera (nachfolgend Kamera genannt), bei dem die Objektkoordinaten aus den Grauwertverläufen der von der Kamera auf deren Sensor erzeugten Bilder der Objektoberfläche bestimmt werden. Die Erfindung ist besonders geeignet für die Vermessung von statischen Objektoberflächen.
Der Grundgedanke der Erfindung besteht darin, daß die Verfolgung von Merkmalen (Kanten, Ecken) bzw. Pixelblöcken mit ausreichender Struktur von einem Bild, das in der Anfangsposition der Kamera erzeugt wurde, bis zu einem Bild, das in der Endposition der Kamera erzeugt wurde, einfacher bzw. mit höherer Sicherheit durchführbar ist, wenn diese Verfolgung schrittweise über ein oder mehrere Bilder erfolgt, die in Kamera-Positionen erzeugt wurden, die zwischen der Anfangs- und der Endposition der Kamera liegen (nachfolgend "Zwischenpositionen" genannt).
Der besondere Vorteil der Erfindung besteht demnach darin, das der in der Stereofotogrammetrie übliche Kompromiß zwischen großer und kleiner Basisbreite (Abstand der Kameras zueinander) elegant gelöst wird.

## Beschreibung

Die Erfindung betrifft ein Verfahren zur dreidimensionalen optischen Vermessung von Objektoberflächen mittels einer digitalen Kamera (nachfolgend Kamera genannt), bei dem die Objektkoordinaten aus den Grauwertverläufen der von der Kamera auf deren Sensor erzeugten Bilder der Objektoberfläche bestimmt werden. Die Erfindung ist besonders geeignet für die Vermessung von statischen Objektoberflächen.

Die Bezeichnung Kamera wird nachfolgend als Sammelbegriff für Kameras mit digitalen Sensoren verwendet. Jedoch sollen nachfolgend als Kamera auch solche Einrichtungen verstanden werden, welche das Bild der Objektoberfläche als Dichte- oder Farbverteilung auf einem Substrat speichern und diese Dichte- oder Farbverteilung zu einem späteren Zeitpunkt pixelweise erfassen. Eine solche Einrichtung könnte aus einem herkömmlichen Fotoapparat und einem Scanner bestehen.

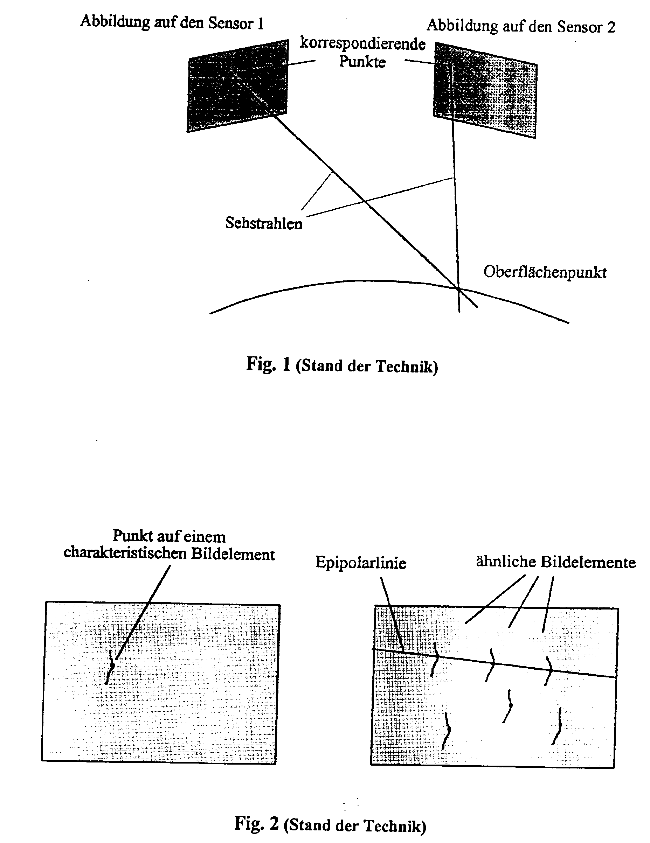

Es ist bekannt, mit Hilfe von zwei Kameras Objektoberflächen unter Verwendung eines Triangulationsverfahrens dreidimensional zu vermessen. Hierbei wird im ersten Schritt ein sogenanntes korrespondierendes Punktepaar in zwei Bildern der beiden Kameras bestimmt. Dies sind Bildpunkte, die durch Abbildung ein und desselben Oberflächenpunktes entstanden sind (Fig. 1). Sind die Koordinaten des korrespondierenden Punktepaares in den beiden Bildern bekannt, dann kann die eigentliche Triangulation durchgeführt werden, indem die Koordinaten des Oberflächenpunktes als Schnittpunkt der beiden "Sehstrahlen" berechnet werden (Fig. 1).

Für diese Koordinaten-Berechnungen werden häufig Punkte innerhalb von charakteristischen Bildelementen der einen Kamera ausgewählt. Bei der (automatischen) Bestimmung eines korrespondierenden Punktes im anderen Kamerabild ist zunächst das korrespondierende Bildelement zu finden. Das ist dann problematisch, wenn es mehrere ähnliche Elemente gibt, die theoretisch alle in Frage kommen (Fig. 2).

Diese Mehrdeutigkeiten bei der Bestimmung korrespondierender Punktepaare (sog. Korrespondenzproblem) müssen gelöst werden, um die Triangulation durchzuführen, Das Korrespondenzproblem und damit die Anzahl der Mehrdeutigkeiten kann durch Verwendung der Epipolargeometrie wesentlich eingeschränkt werden. Denn der korrespondierende Punkt zu einem ausgewählten kann aus bestimmten geometrischen Zwängen nur auf der Epipolarlinie liegen (Fig. 2). Um die Epipolarlinie zu bestimmen, ist allerdings die Kenntnis der inneren und äußeren Kameraparameter notwendig.

Es gibt zur Zeit noch keine universelle Methode, mit der das Korrespondenzproblem gelöst werden kann. Jedoch existieren einige Methoden, mit denen bei bestimmten Meßbedingungen das Problem gelöst bzw. sehr stark verringert werden kann:
Eine weitverbreitete Methode besteht in der Projektion von graykodierten Mustern (z.B. DE 3119857 A1; DE 4120115 A1) auf die Oberfläche mit Hilfe eines Musterprojektors. Hierbei werden sehr grob strukturierte und immer feiner werdende Muster projiziert, so daß beide Bilder in viele korrespondierende Bereiche unterteilt werden können. Diese Methode kann wegen der notwendigen Mehrfachprojektionen nur im Nahbereich und bei statischen Objekten eingesetzt werden. Des weiteren spielen die Kosten auch eine gewisse Rolle, da ein relativ hochwertiger Projektor benötigt wird, der geeignet ist zur Erzeugung von präzisen und vor allem reproduzierbaren Linien.

Bei einer anderen Methode werden zwei baugleiche Kameras verwendet, deren optische Achsen zueinander parallel sind. Des weiteren müssen sich die beiden Bildsensoren in einer Ebene befinden und zueinander 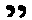 auf gleiche Höhe" ausgerichtet sein. Dies ist der sog. Normalfall (Kraus, K.: Photogrammetrie ― Grundlagen und Standardverfahren. Band 1, Ferd. Dümmlers Verlag, Bonn, 1990). Durch diese Vorgehensweise wird das Korrespondenzproblem nicht gelöst, aber stark entschärft. Die beschriebenen Aufnahmebedingungen können jedoch nur näherungsweise realisiert werden. Ein Beispiel hierfür ist die Ausrichtung der optischen Achsen. Das Prinzip besteht in folgendem: Ist der Abstand der Kameras zueinander (die Basisbreite) relativ klein, dann sind die Differenzen korrespondierender Bildelemente, die sog. Parallaxen, ebenfalls relativ klein. Es kommt demnach nur ein kleiner Bereich für ein korrespondierendes Element in Frage. Nachteilig ist dabei, daß bei kleiner Basisbreite der Meßfehler automatisch groß ist. Wird die Basisbreite dagegen vergrößert, dann vergrößern sich auch die Bereiche möglicher Korrespondenz.

Bei einer weiteren Methode wird der Bildinhalt analysiert: Charakteristische Merkmale werden in beiden Bildern gesucht und spezielle Parameter zur Bewertung dieser Merkmale berechnet (Haralick, R. M.; Shapiro, L. G.: Computer and Robot Vision. Volume II, Addison-Welsey Publishing Company, Inc., 1993). Hierdurch werden die Mehrdeutigkeiten erheblich reduziert. Dieses Verfahren ist für die Vermessung größerer Objekte (z.B. Häuser) und auch sich bewegender Objekte verwendbar. Nachteilig ist, daß es zum einen nicht hundertprozentig ist und zum anderen spezielle Algorithmen notwendig sind, wodurch der Rechenaufwand erhöht wird. Des weiteren müssen die Algorithmen unter Umständen an den Bildinhalt angepaßt werden.
Aus den dargelegten Beispielen wird deutlich, daß es wie bereits erwähnt noch keine universelle Lösung des Korrespondenzproblems gibt.

Der Erfindung liegt daher die Aufgabe zugrunde, ein Verfahren und eine zugehörige Anordnung zu entwickeln, mit dem bei der dreidimensionalen optischen Vermessung von Objektoberflächen mittels einer einzigen digitalen Kamera eine einfache und weitestgehend sichere Lösung des Korrespondenzproblemes realisiert wird. Als Randbedingung für diese Aufgabe soll gelten, daß sich die zu vermessenden Objektoberflächen für die Dauer von Bildaufnahmen als statische Objekte verhalten.

Erfindungsgemäß wird diese Aufgabe durch ein Verfahren gemäß Anspruch 1 sowie eine Vorrichtung gemäß Anspruch 6 gelöst. Vorteilhafte Ausführungsformen der Erfindung und deren Vorteile ergeben sich unmittelbar aus den Unteransprüchen.

Der Grundgedanke des erfindungsgemäßen Verfahrens besteht darin, daß die Verfolgung von Merkmalen (Kanten, Ecken) bzw. Pixelblöcken mit ausreichender Struktur von einem Bild, das in der Anfangsposition der Kamera erzeugt wurde, bis zu einem Bild, das in der Endposition der Kamera erzeugt wurde, einfacher bzw. mit höherer Sicherheit durchführbar ist, wenn diese Verfolgung schrittweise über ein oder mehrere Bilder erfolgt, die in Kamera-Positionen erzeugt wurden, die zwischen der Anfangs- und der Endposition der Kamera liegen (nachfolgend "Zwischenpositionen" genannt).

Der besondere Vorteil der Erfindung besteht demnach darin, das der in der Stereofotogrammetrie übliche Kompromiß zwischen großer und kleiner Basisbreite (Abstand der Kameras zueinander) elegant gelöst wird.

Die Erfindung ist insbesondere dann zweckmäßig einsetzbar, wenn kein Projektor zur Erzeugung mehrerer, geeigneter Muster, wie er für einige Verfahren nach dem Stand der Technik notwendig ist, eingesetzt werden kann. Dies ist vor allem bei der Vermessung größerer Objekte (z.B. Häuser) der Fall. Die Erfindung ist jedoch auch für den Nahbereich vorteilhaft und kostengünstig einsetzbar, da sie wegen des Verzichts auf einen Musterprojektor kostengünstig und einfach handhabbar ist.

Ein weiterer Vorteil der Erfindung besteht dann, daß die Anzahl der für die Verarbeitung der Bildinformationen notwendigen Verfahrensschritte adaptiv an den Schwierigkeitsgrad der Verfolgung der Merkmale oder Pixelblöcke anpaßbar ist.

Die erfindungsgemäße Lösung wird nachfolgend anhand eines Ausführungsbeispieles näher erläutert. In der zugehörigen Zeichnung zeigt
- Fig. 1: eine Skizze der geometrischen Beziehungen zur Berechnung der 3D-Koordinaten eines Oberflächenpunktes durch Triangulation (Stand der Technik),
- Fig. 2.: eine Skizze zur Veranschaulichung des Korrespondenzproblems bei der Verfolgung ähnlicher Bildelemente in aufeinanderfolgenden Bilder sowie die Einschränkung des Suchbereiches durch die Epipolarlinie (Stand der Technik),
- Fig. 3: eine schematische Darstellung einer Anordnung zur Durchführung des erfindungsgemäßen Verfahrens bestehend aus nur einer Kamera und einer Verschiebeeinheit
- Fig. 4: extrahierte Merkmale (z.B. Kanten) mit sehr geringfügigen Unterschieden zwischen aufeinanderfolgenden Bildern
- Fig. 5: ein stark vergrößerter Bildausschnitt einer sehr kleinen Verschiebung eines Merkmals in aufeinanderfolgenden Bildern,
- Fig. 6: Verfolgung eines Pixelblockes in den Bildern 1 und 2

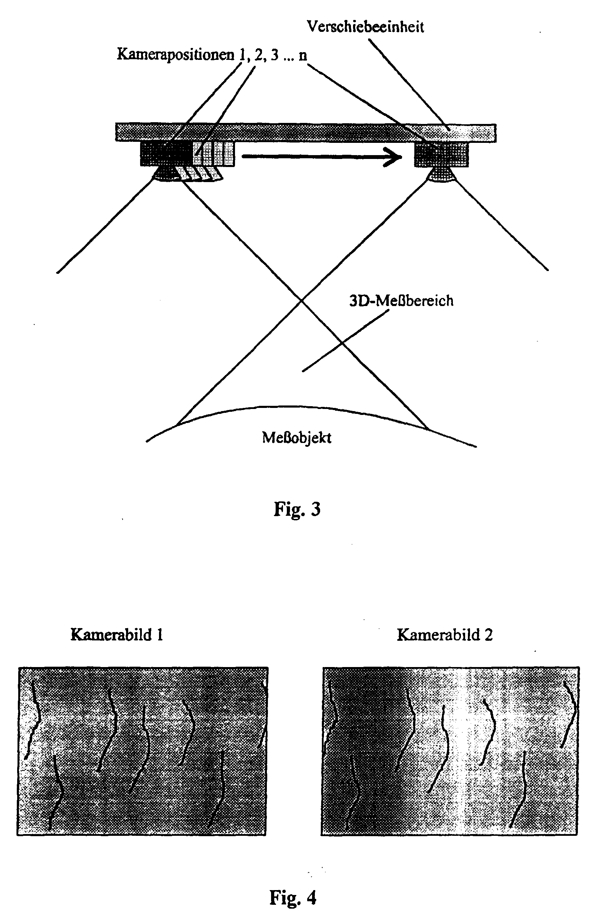

Der Meßaufbau besteht erfindungsgemäß aus nur einer digitalen Kamera, die auf einer Verschiebeeinheit angeordnet ist (Fig. 3). Die Verschiebeeinheit ist starr in Bezug zum Meßobjekt befestigt. Durch die Verschiebeeinheit wird in der Regel eine Linearverschiebung der digitalen Kamera realisiert. Eine bogenförmige Verschiebung ist jedoch auch vorteilhaft, da diese zu einer Optimierung des Meßvolumens führen kann.

Mit Hilfe der digitalen Kamera wird eine Serie von Bildern aufgenommen, die sich durch nur sehr kleine Verschiebungen unterscheiden. Zunächst wird ein Bild des Meßobjektes in der Anfangsposition der Kamera aufgenommen (Fig. 3, Position 1). Anschließend wird die Kamera nur geringfügig verschoben (Fig. 3, Position 2) und erneut ein Bild in dieser Zwischenposition aufgenommen. Diese Vorgehensweise wird bis zur Endposition der Kamera fortgesetzt (Fig. 3, Position n).

Das erfindungsgemaße Verfahren verbindet die Vorteile von kleinen und großen Basisbreiten im Sinne der Stereofotogrammetrie: Die sehr kleinen Verschiebungen zwischen aufeinanderfolgenden Positionen entsprechen sehr kleinen Basisbreiten. Die Basisbreite zwischen den Kamerapositionen 1 und n ist groß genug für eine relativ genaue Berechnung von 3D-Koordinaten.

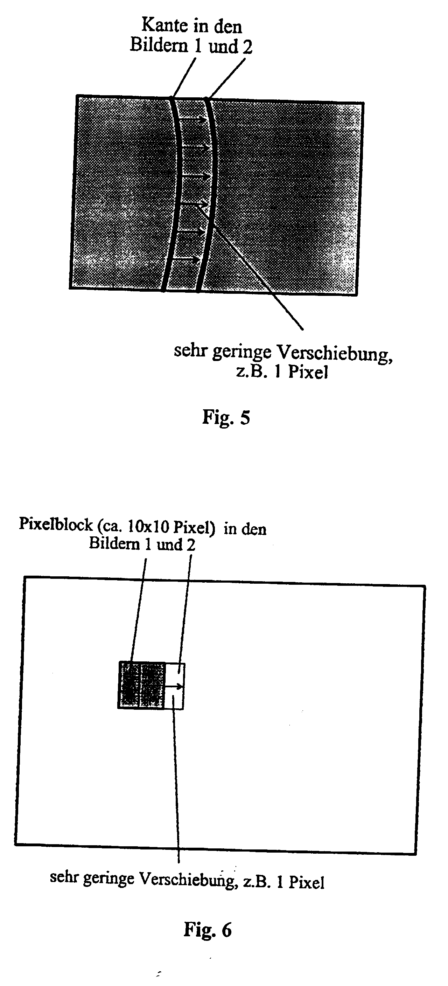

Durch die sehr kleine Verschiebung zwischen aufeinanderfolgenden Positionen der digitalen Kamera unterscheiden sich die Bilder für diese Kamerapositionen kaum (Fig. 4). Dadurch gibt es auch nur geringfügige Verschiebungen der extrahierten Merkmale zwischen diesen Bildern (Fig. 5). Dies vereinfacht das Verfolgen von Merkmalen oder Pixelblöcken mit ausreichender Struktur zwischen den Bildern, die mit der digitalen Kamera in benachbarten Kamerapositionen aufgenommen wurden. Hierdurch wird eine sichere und einfache Lösung des Korrespondenzproblems zwischen aufeinanderfolgenden Bildern ermöglicht und somit auch zwischen den Bildern, die in der Anfangs- und Endposition der digitalen Kamera (Fig. 3, Kamerapositionen 1 und n) aufgenommen wurden. Aus letztgenannten Bildern werden dann die 3D-Koordinaten berechnet.

Eine günstige Methode zur Auswertung der Bilder besteht in der Extraktion von Merkmalen, z.B. Kanten, in allen Bildern. Zunächst werden in einem in der Anfangsposition der Kamera aufgenommenen Bild 1 (möglichst viele) Merkmale extrahiert. Dies können z.B. Kanten oder auch Ecken sein. Wurden Kanten ausgewählt, dann sind auf diesen einzelne Punkte auszuwählen, die in den weiteren Bildern verfolgt werden sollen. Die Bildkoordinaten dieser Punkte werden gespeichert.
Die Verfolgung eines Merkmals wird dadurch realisiert, daß im nächsten Bild oder in einem der folgenden Bilder in der näheren Umgebung nach einem Merkmal derselben Art gesucht wird. Die Größe der näheren Umgebung (z.B. 1 Pixel ... 3×3 Pixel) wird vom Anwender festgelegt. Bei Verwendung des in Fig. 3 dargestellten Aufbaus verschieben sich die Merkmale entlang der Bildzeilen. Somit ist die nähere Umgebung ein kleiner Abschnitt auf einer Bildzeile, ausgehend von den Merkmalen und deren bekannten Richtungen, die durch die Bewegungsrichtung der Kamera bedingt wird.
In der Regel ist davon auszugehen, daß sich in diesem Bereich genau ein Merkmal befindet. Gibt es kein Merkmal, dann gilt es als verloren, und es wird von seiner weiteren Verfolgung abgesehen. Werden mehr als ein Merkmal gefunden, dann liegt ein Mehrdeutigkeitsproblem vor. In diesem Fall wird die Suche ebenfalls abgebrochen. Entsprechend dem erfindungsgemäßen Verfahren kann die Suche nach nicht verfolgten Merkmalen auch in einem Bild wiederholt werden, dessen Merkmale eine kleinere Verschiebung aufweisen.

Auf diese Weise werden ausgewählte Merkmale von Bild zu Bild verfolgt. Hierdurch wird die Zuordnung der Bildkoordinaten der Merkmale von einem in der Anfangsposition der Kamera (Fig. 3, Kameraposition 1) aufgenommenen Bild zu einem in der Endpositionder Kamera (Fig. 3, Kameraposition n) aufgenommenen Bild realisiert. Aus diesen Paaren von Bildkoordinaten können die 3D-Koordinaten in bekannter Weise durch Triangulation berechnet werden (Fig. 1).

Neben der Verfolgung von Kantenpunkten oder Ecken besteht die Möglichkeit, Pixelblöcke zu verfolgen (Fig. 6). Diese haben in der Regel eine Größe von ca. 10×10 bis 15×15 Pixel. Bei der Auswahl dieser Blöcke im ersten Kamerabild ist darauf zu achten, daß eine ausreichende Grauwertstruktur enthalten ist, um die Identifizierung zu ermöglichen.
Einem ausgewählten Pixelblock werden in der Regel seine Mittelpunktkoordinaten zugeordnet. Für die Bestimmung der neuen Position im darauffolgenden Bild wird wieder die nähere Umgebung abgesucht. Als Kriterium der Detektion wird z.B. das Minimum der Summe der Fehlerquadrate verwendet. Dieses kann sowohl im Pixel- als auch im Subpixelbereich bestimmt werden. Ein anderes verwendbares Kriterium ist der Kreuzkorrelationskoeffizient. Hier ist das Maximum zu bestimmen. Die 3D-Koordinaten werden ausgehend von den Mittelpunktkoordinaten der Pixelblöcke durch Triangulation berechnet.

## Patentansprüche

1. Verfahren zur dreidimensionalen optischen Vermessung von Objektoberflächen, bei dem eine digitale Kamera und eine Objektoberfläche nacheinander mindestens drei verschiedene vorgebbare Positionen relativ zueinander einnehmen, mittels der digitalen Kamera in jeder dieser Positionen mindestens ein Bild der Objektoberfläche erzeugt und auf diese Bilder die folgenden Operationen angewendet werden:
a) in einem Bild, das in der Anfangsposition erzeugt wurde, werden diejenigen Merkmale (Kanten, Ecken) bzw. Pixelblöcke mit ausreichender Struktur detektiert und ausgewählt, deren Objektkoordinaten bestimmt werden sollen, und es werden die Pixelkoordinaten der ausgewählten Merkmale oder Pixelblöcke gespeichert,
b) in einem Bild, das in einer zwischen der Anfangs- und der Endposition liegenden Zwischenposition erzeugt wurde, wird geprüft, ob sich in der festgelegten näheren Umgebung der im Schritt a) ausgewählten Merkmale oder Pixelblöcke jeweils genau ein Merkmal derselben Art bzw. ein Pixelblock mit ausreichender Struktur derselben Art befindet und
- wenn die Prüfung positiv ausfällt, gelten diese Merkmale bzw. Pixelblöcke
als verfolgt,
- andernfalls wird
- das Merkmal bzw. dieser Pixelblock von der weiteren Verarbeitung
ausgeschlossen oder
- die Prüfung mindestens einmal für ein Bild wiederholt, das in einer Position erzeugt wurde, die zu einer kleineren Verlagerung der Merkmale bzw. Pixelblöcke im Vergleich zu derjenigen des vorher mit negativem Ergebnis geprüften Bildes führt,
c) wenn die Verfolgung von bereits als verfolgt geltenden Merkmalen oder Pixelblöcken für mindestens eine weitere Zwischenposition fortgesetzt werden soll, wird in den in diesen Zwischenpositionen erzeugten Bildern geprüft, ob sich in der festgelegten näheren Umgebung der gemäß einer vorhergehenden Prüfung bereits als verfolgt geltenden Merkmale oder Pixelblöcke jeweils genau ein Merkmal derselben Art bzw. ein Pixelblock mit ausreichender Struktur derselben Art befindet und
- wenn die Prüfung positiv ausfällt, gelten diese Merkmale bzw. Pixelblöcke als verfolgt,
- andernfalls wird
- das Merkmal bzw. dieser Pixelblock von der weiteren Verarbeitung
ausgeschlossen oder
- die Prüfung mindestens einmal für ein Bild wiederholt, das in einer
Position erzeugt wurde, die zu einer kleineren Verlagerung der Merkmale bzw. Pixelblöcke im Vergleich zu derjenigen des vorher mit negativem Ergebnis geprüften Bildes führt,
d) in einem Bild, da in der Endposition erzeugt wurde, wird geprüft, ob sich in der festgelegten näheren Umgebung der entsprechend einem vorhergehenden Schritt als verfolgt geltenden Merkmale bzw. Pixelblöcke jeweils genau ein Merkmal derselben Art bzw. ein Pixelblock derselben Art befindet, und
- wenn die Prüfung positiv ausfällt, gelten diese Merkmale bzw. diese Pixelblöcke als von der Anfangs- bzw zur Endposition verfolgt und es werden die Pixelkoordinaten dieser Merkmale bzw. Pixelblöcke gespeichert,
- andernfalls wird
- das Merkmal bzw. dieser Pixelblock von der weiteren Verarbeitung ausge
schlossen oder
- nochmals einer Prüfung gemäß Schritt c) für ein Bild durchgeführt, das in
einer Position erzeugt wurde, die zu einer kleineren Verlagerung der Merkmale bzw. Pixelblöcke im Vergleich zu derjenigen des in der Endposition erzeugten Bildes führt und nachfolgend der Schritt d) wiederholt,
e) für die Koordinaten der Merkmale bzw. Pixelblöcke, die als von der Anfangs- bis zur Endposition verfolgt gelten, werden die 3D-Koorddinaten der Objektoberfläche in an sich bekannter Weise unter Verwendung der inneren und äußeren Kameraparameter an der Anfangs- und der Endposition berechnet.

2. Verfahren nach Anspruch 1, dadurch gekennzeichnet, daß die verschiedenen Positionen zwischen der digitalen Kamera und der Objektoberfläche mittels Bewegung der digitalen Kamera und/oder des Objekts, dessen Oberfläche zu vermessen ist, entlang ebener Bahnkurven erzeugt werden.

3. Verfahren nach Anspruch 2, dadurch gekennzeichnet, daß mindestens eine Bahnkurve eine Gerade ist.

4. Verfahren nach Anspruch 2 oder 3, dadurch gekennzeichnet, daß die optische Achse der digitalen Kamera in allen Positionen senkrecht auf der Geraden steht, entlang der die digitale Kamera bewegt wird.

5. Verfahren nach einem der vorhergehenden Ansprüche, dadurch gekennzeichnet, daß die digitale Kamera und/oder das Objekt, dessen Oberfläche zu vermessen ist, entlang von Geraden bewegt werden und als nähere Umgebung im Sinne der Verfahrensschritte b) und d) aus Anspruch 1 ein linienförmiger Bereich ausgewählt wird, der sich je nach der Richtung der Verschiebung der digitalen Kamera gegenüber dem Objekt links oder rechts von der Position des aktuellen Merkmals bzw. Pixelblockes erstreckt.

6. Anordnung zur Durchführung des Verfahrens nach Anspruch 1, dadurch gekennzeichnet, daß die digitale Kamera mittels einer Verschiebeeinheit motorisch oder manuell in mindestens drei verschiedenen vorgebbaren Positionen relativ zu der zu vermessenden Oberfläche positionierbar ist.

7. Anordnung nach Anspruch 6, dadurch gekennzeichnet, daß die Verschiebeeinheit als lineare Translationseinheit ausgebildet ist.
